# EUROPEAN PATENT SPECIFICATION

(11) **EP 1 935 154 B1**
(45) Date of publication and mention of the grant of the patent: **01.06.2011**
(21) Application number: 06816843.4
(22) Date of filing: 12.10.2006
(51) Int. Cl.: H04L 12/66, H04L 29/08, H04L 12/24

(54) **METHOD AND SYSTEM FOR DETECTING A CHANGE IN DEVICE ATTACHMENT**
VERFAHREN UND SYSTEM ZUM DETEKTIEREN EINER ÄNDERUNG DES EINRICHTUNGSANSCHLUSSES
PROCEDE ET SYSTEME DESTINES A DETECTER UN CHANGEMENT DE POINT DE CONNEXION D'UN DISPOSITIF

(30) Priority: 13.10.2005 US 725645 P
(43) Date of publication of application: 25.06.2008
(73) Proprietor: VONAGE HOLDINGS CORP., Holmdel, NJ 07733 (US)
(72) Inventor: CITRON, Jeffrey, Holmdel, NJ 07733 (US); MAMAKOS, Louis, Lawrenceville, NJ 08648 (US)
(74) Representative: Liesegang, Eva
(86) International application number: PCT/US2006/040022
(87) International publication number: WO 2007/047413

(56) References cited:
- EP-A- 1 337 089
- US-A- 4 881 074
- US-A1- 2001 047 407
- US-A1- 2003 216 143
- US-A1- 2005 114 507
- US-A1- 2005 223 115

## Description

The disclosure claims the filing-date benefit of Provisional Application No. 60/725,645 filed 13 October 2005, the specification of which is incorporated herein in its entirety.

### Background

When a device is connected to a telecommunications network, the device generally has a Network Address (an IP address, a node identifier) that is topologically significant with respect to the network. The Network Address enables the device to transmit and receive information over the network. For example, in a packet-switched network, the Network Address is used to forward a packet, hop-by-hop, through nodes on the network from some ingress point to the addressed device. The Network Address is generally only significant with respect to the topology of the network and is not typically directly related to the geographical location of the device.

As the Internet has exploded in number of users and devices, the problem of address exhaustion of the current IPv4 addressing scheme has been tackled using a myriad of technologies, many of which will also be used in next generation schemes such as IPv6. Dynamic Host Configuration Protocol (DHCP, based on Bootstrap protocol - BOOTP), Network Address Translation (NAT), Port Address Translation (PAT), proxies, subnet masking, simplified and distributed routing, and proxies are just a few examples of such technologies. These approaches enable users and devices to dynamically interact over the network without the need for centralized intervention to assign IP addresses while ensuring successful communication over the network. While enabling the Internet to scale, this decentralization of addressing administration also has eroded much of the previously readily discernable relationships between network addresses and geographic location.

The decentralized and dynamic nature of the Internet has notable implications on Voice-over-IP (VoIP) services. For instance, technologies such as NAT and PAT generally require additional technical solutions to enable connections and data routing for VoIP sessions. Further, calling features such as E911 require that the physical location of the user/device be provided to a Public Safety Answering Point (PSAP). Additionally, even if the initial physical location of a subscriber or device is known, for instance through a registration or enrollment process, changes in this physical location must be identified and recorded to enable proper response by emergency personnel. Advertisers are also keenly interested in understanding the present location of users on the Internet to provide more relevantly targeted ads.
US 2005/0114507 A1 describes a method for detecting an addition or removal of a device in a network by detecting a physical location of the device connected to the network, monitoring a unique identifier (e.g. MAC address) of the network device, and creating configuration information from the identifier and from the physical connection location of the network device.

Based on the increasingly disjoint relationship between network topology and physical location, detecting a change in physical location is problematic. Further, since the topology of the network is constantly in flux, a single device may change network address many times without moving. Thus, trivial examination of any address change yields too many false positives and wasted resources as service providers attempt to address each address change as a change in location.

### Summary

The present invention provides a method of detecting a change in location of a device attached to a network according to claim 1 and a method of detecting a change in device attachment on a network according to claim 9.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the claims.

### Brief Description of the Drawings

Various aspects of the present disclosure will be or become apparent to one with skill in the art by reference to the following detailed description when considered in connection with the accompanying exemplary non-limiting embodiments, wherein:

Fig. 1 is a schematic representation of an embodiment of the present disclosure;

Fig. 2 is a schematic representation of address change detection;

Fig. 3 is flow chart illustrating an embodiment of the present disclosure; and

Fig. 4 is flow chart illustrating another embodiment of the present disclosure.

### Detailed Description

One aspect of the present disclosure includes detecting a change in a network address. In another aspect, a temporal parameter is determined corresponding to a device event. In yet another aspect, a change in physical location is detected. In an additional aspect of the present disclosure, empirical methods are applied to the detection of a change in physical location. In a further aspect, the physical location of the device is updated.

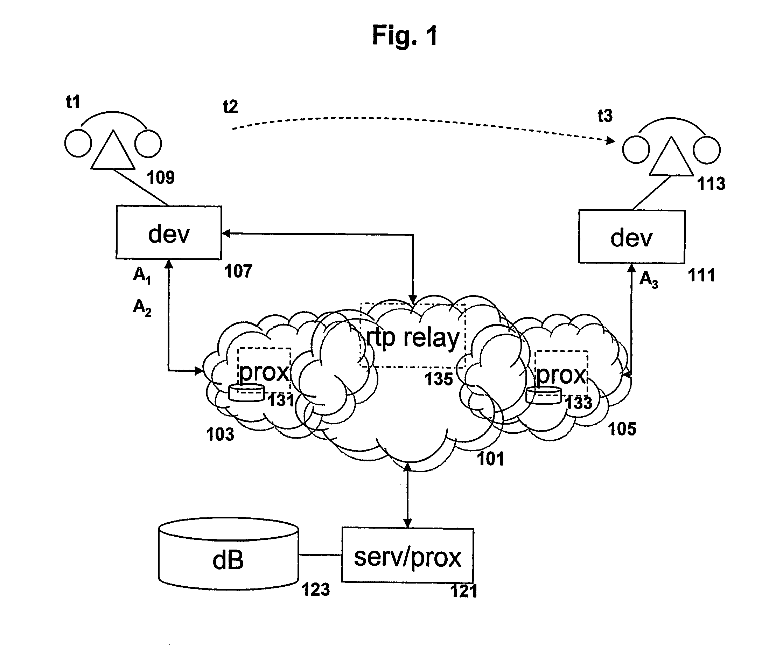

Fig. 1 illustrates exemplary scenarios in which presently disclosed embodiments apply. As noted above, a device connected to the network generally has a network address such as an IP address. A terminal 109, such as a phone, is connected to a host device 107 attached to a network or networks 101, 103. A host device 107 can include, but is not limited to, a media terminal adapter, a stationary computer, mobile computing device, or a specialized VoIP device capable of translating between analog signals and digital signals such as packetized data for transmission over a network. The device 107 is configured to communicate with a server 121. The server 121 communicates with a database 123. Optionally, the database 123 is distributed across the network in a plurality of databases to provide redundancy and/or local access.

The server 121 is, for example, a server for coordinating VoIP service or Instant Messaging (IM) to and from the user device 107. In selected embodiments, the device 107 registers with a proxy 131 through which communication with the server 121 is routed. In other embodiments, the server 121 itself is a proxy server for registering and maintaining device connections. Multiple such servers 121 can be used in a system. For example, they may be distributed across the network to assist in address resolution of private non-routable addresses similar to the illustrated proxies 131, 133. Thus, various embodiments of the present disclosure enable detection of location change either through a central proxy server or in distributed fashion by pushing the detection further towards the device through the use of multiple servers. The device 107 optionally communicates with other devices and servers on the network using one of Session Initialization Protocol (SIP), Real-time Transfer Protocol (RTP), Internet Protocol (IP), etc..

In the illustrated exemplary scenario, at a first point in time (t1), the device 107 is associated with network address A₁. At a second point in time (t2), the device 107 is disconnected. Just prior to disconnection, the device 107 is associated with network address A₂. For example, A₁ may differ from A₂ if there was a DHCP reassignment between t1 and t2. At a third point in time (t3), the device is reconnected 111 to the network or networks 101, 105 after being physically moved. Once reconnected, the device 111 is associated with another network address A₃. Addresses A₁, A₂, and A₃ are recognized by the server 121 and recorded in the database 123. Alternately, proxies 131, 133 may recognize the addresses. Address recognition is accomplished by various approaches including viewing IP packet headers which include node and routing addresses as well as SIP messages from the device 107. Messages include, but are not limited to, Session Description Protocol (SDP) headers and other headers with device and route-identifying data. The database 123 includes the various dynamic and static identifying information including, but not limited to, IP address, port numbers, VoIP telephone numbers, times of device events, registration, and reachability, and other activity data for host devices 107.

In case a user device is behind a firewall or NAT/PAT router, address information can be passed through or translated through the use of a proxy 121, 131, 133. These entities may include databases associating private address information including port numbers with routable addresses to allow signaling communications between devices. Data communication between the user device 107 and other devices (for example, another VoIP user terminal) can be routed through a RTP relay 135. These or similar approaches provide routing information through which address information can be resolved remotely if the address information is not transmitted directly. Additional alternative embodiments include procedures by which the user device registers with a service provider proxy. These proxies store the private, non-routable network address and/or port number for enabling communication with the device. Optionally, the user devices 107 register with the proxy with a frequency greater than a NAT/PAT keep-alive, thereby preventing the closure of any established pass-throughs required for signaling. Further, a proxy 121, 131, 133 can manipulate headers, including but not limited to, IP address and port numbers in SDP data, to successfully route control/signaling data and establish data communication among user devices.

In various embodiments, the database 123 further includes physical location data for the host devices 107, the physical location data including, but not limited to, GPS coordinates, mailing or street address, latitude, longitude, elevation, or relative coordinates based on selected known point. Location data may be provided by the user during registration or be provided by the service provider through IP geolocation estimates based on user location and network data. The amount of physical movement can correspond to events including, but not limited to, a user walking down the street, moving to an apartment in another neighborhood, relocation between states, or even moving outside the country.

It is noted that any one or all of these links can be wired or wireless and computing and database operations can be divided or combined (for instance, multiple databases and servers) while preserving operability of the disclosed embodiments. Further, the figure does not illustrate all various intermediaries such as DNS and proxy servers, gateways (including Application Layer Gateways), and routers within the networks 101, 103, 105. Given the decentralized routing of the Internet, it is understood that the communicated data can take a variety of paths and still enable real-time communication such as voice, IM and multimedia, as well as non-real time communication such as web browsing and file transfers.

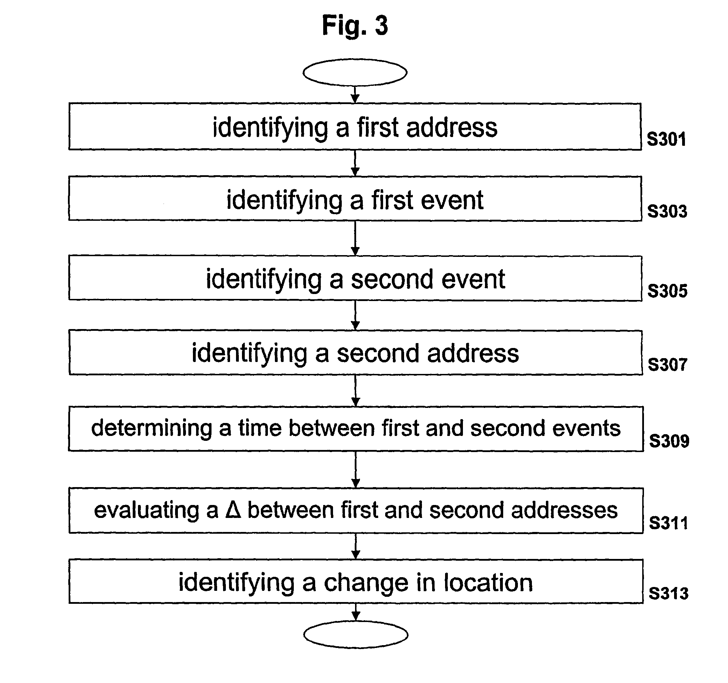

Fig. 3 illustrates an exemplary flow chart describing an embodiment of the disclosure. A first address, such as an IP address or other network identifier, of a device attached to a communications network is identified S301. A first event, such as removal of the device, is identified S303. A second event, such as reconnection to the network, is also identified S305. Further, a second address of the device after the second event or reconnection is identified S307. The time between the events (for example, removal and reconnection) of the device with the communications network is determined S309. Differences between the first and second address are evaluated S311. Then, based on the differences between the first and second addresses, a change in location is identified S313.

Alternatively, the identification of change in location S313 is a function of the time between the events S309. Optionally, the duration of time the device is connected to the communication network at the first address is tracked or determined, and the change in location determination S313 is a function of this duration of time at the first address. Alternatively, a relevant change in address is identified S313 if the difference between addresses exceeds a predetermined threshold.

Optionally, a user of the device is prompted to provide an updated physical location of the device if a change in location is identified by S313. This prompt optionally includes an estimate of the new physical location provided by the server 121 or instead prompts a system administrator to intervene by updating the physical location without the user input or to prompt the user for location information. Once the new location is determined either by input or by calculation/estimation, this new location is updated in the database 123. The location information is provided to a PSAP in response to an emergency communication (such as a 911 call) received over the network from the device 107, 111. The emergency communication is also routed to the PSAP. The PSAP is optionally the closest PSAP to the physical location or the PSAP which otherwise serves the area including the physical location.

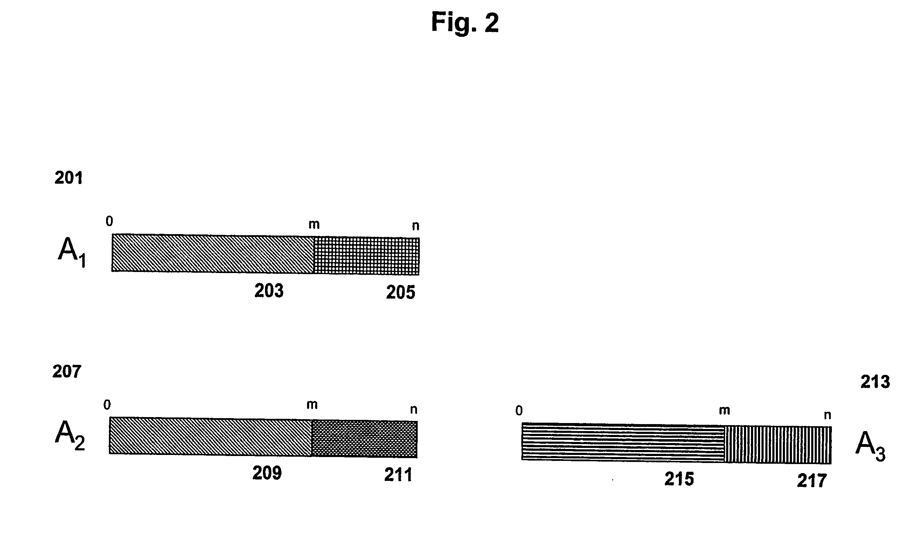

Fig. 2 illustrates an embodiment of address change determination including various network address change scenarios. For a certain device, the network address changed from A₁ 201 to A₂ 207. Here, a host portion 205 has changed to a new host portion 211, but the network prefix (and/or subnet identifier) 209 remained the same as the prefix in A₁ 203. Embodiments determine whether the address change is relevant according to criteria such as a predetermined threshold. For example, if a determination of possible location change requires a change in network prefix or subnet identifier, a location change would not be indicated in this scenario. In another case, the network address changed from either A₁ 201 or A₂ 207 to A₃ 213. In either instance, the new network prefix 215 and host portion 217 are different from those in A₁ or A₂. Accordingly, certain embodiments of the system, depending on the magnitude of the change in address and time analysis described below, indicates a relevant address change which may have resulted from a location change.

Thus, if a "fixed" device has changed physical locations, it requires a new Network Address that is topologically significant for the new attachment point. The device generally obtains this new Network Address either through a manual configuration process, whereby the operator of the device configures it using some active intervention, or the network may automatically assign the device a Network Address that is suitable for use with respect to the new Network attachment point using some maintenance network protocol including, but not limited to, DHCP or BOOTP.

Determining an amount or degree of network address change can apply a variety of approaches. In addition to temporal considerations discussed elsewhere, such determination of address change magnitude distinguishes relevant address changes (indicating a possible change in location) from those likely to have resulted from mere address reassignment. For instance, the number of bits in the binary representation of the address can be counted. Additionally, the difference in decimal or hexadecimal representation of the address can be calculated. Further, the hamming distance or signal distance between the addresses can be determined. Moreover, approaches such as calculating a Levenshtein distance can also be implemented. Used alone or in combination, these methods result in determination of an address change magnitude.

In calculating a magnitude of address change, various embodiments account for factors related to addressing schemes, such as the network prefix, subnet portions and masking, and host portions of the network address. For instance, selected embodiments take into account a change in only certain portions, such as the host portion, to determine a change or magnitude of change of network address. In the example of a DHCP client, a change in only a host portion may indicate that the physical location of the device has not changed. Moreover, various embodiments also take into account a change in various portions of the network address. For instance, in one embodiment, an indication of physical location change is triggered only if both the network prefix and subnet identifier change, or if at least one of the network prefix or subnet identifier changes. This indication can be further qualified by the magnitude or degree of change within those portions discussed above.

Selected embodiments compare the magnitude of change in address to a predetermined address threshold to identify relevant changes in address. This address threshold can be absolute or relative to another variable. Optionally, the threshold may itself be a function of a temporal parameter discussed in greater detail elsewhere in the disclosure. For instance, the address threshold may be generally inversely proportional to the magnitude of the temporal parameter. For instance, a greater change in address would require less of a disconnect duration to result in an indication of possible location change. Alternatively, the functional relationship includes, but is not limited to, additive, multiplicative, polynomial, exponential, differential, or logarithmic. The functional form of the threshold can be tailored to considerations such as false positive rate and processing/memory resources.

In alternative embodiments, the amount of change in several portions of the address are weighted. For instance, a magnitude of change in subnet identifier may be weighted less than a magnitude of change in network prefix. The magnitude and weighting calculations can be further informed by data relating network prefixes and subnet identifiers to known physical locations, such as those registered in a whois, DNS, LOC, ICANN/IANA, Regional Internet Registries (RIR) including Autonomous System (AS) numbers corresponding to a routable IP address, routing tables, BGP tables, or another commercial or proprietary database. By incorporating knowledge of various addressing schemes into the determination of address change, false positives occur less often.

In instances where the address structure such as the network prefix, subnet identifier, and host portion cannot be identified or resolved remotely, empirical measurements can augment the determination of a relevant address change. For instance, a predetermined threshold for identifying a relevant change can be set in accordance with historical data for the user base of a service provider or using routing data available in packets to indicate the network addresses of the nodes through which the data traveled. These empirical approaches are discussed in greater detail elsewhere in the disclosure.

As described previously, detecting a change in network address alone may lead to false positives due to a disjoint relationship between network addressing topology and physical device location. An address change alone may indicate a possible change in physical location even if the change is merely the result of address reassignment in a DHCP pool. Although taking into consideration a magnitude of address change improves the situation, adding the dimension of time to location change analysis advantageously reduces the occurrence of these false positives.

To detect a change in physical location, some amount of time will transpire while the "fixed" device is disconnected from its previous network attachment point, put into motion, and then subsequently connected to another network attachment point. This lapse in connectivity is a qualifying factor used to determine a geographical change.

Time is recorded for a variety of device events. A device event includes, but is not limited to, a change in network address, connection, disconnection, reconnection, powering on & off, resetting, and physical movement of the device. Time can be measured absolutely (for instance, according to a clock) or relative to other occurrences (such as elapsed time since a device is connected or turned on).

A host part may change due to DHCP or BOOTP reassignment on same subnetwork segment. When moved, the network part will change for different subnetwork at new location. As updates to device address and time of reachability are recorded in the database 123, logic can be used to determine if a change has happened taking into account both the time elapsed since last connect time (or loss) and how much of the address prefix has changed. Analysis of address changes may suggest, for example, that subnets are typically allocated as a 123 prefix or longer. The longer the attachment, the more bits of prefix.

To determine a potential change in the physical location of a device, various embodiments detect specific types of changes in the mode of attachment of the device to the Network, as well as the attached device's Network Address at any given time. As described above, the active Network Address in use by the device is recorded. Further, temporal parameters corresponding to network addresses or events, such as the duration that the device has been active and using a particular Network Address, are also recorded. Alternatively, the time of events such as initial connection, disconnection, and reconnection provide a description of the device's various modes of attachment over time. From these event-associated times, durations of connection and disconnection and other events can be ascertained.

Various approaches can be used to detect a duration that the device, such as on-going contact with the device to verify its "aliveness" and associate that activity with certain network addresses. Intermittent or periodic polling of the device by a server, such as server or proxy 121, 131, 133, can be used. Alternatively, the device checks in with a server or proxy. The frequency of these contacts can be tuned in accordance with known variables such as DHCP IP address and port lease settings and other network device time-outs.

In one embodiment, if a duration of disconnection (time between disconnection and reconnection) exceeds a predetermined threshold, a possible location change is indicated. Further, the temporal factors can interact with the address change analysis. In particular, in one embodiment, a greater duration of disconnection lowers the address change threshold required to indicate a relevant address change, thereby resulting in an indication of a possible location change. Conversely, an address change coupled with a very short disconnection duration (or none at all) would result in an indication of that no location change occurred or that a location change is improbable.

Thus, selected embodiments compare the temporal parameter, such as an absolute time or relative duration, to a predetermined temporal threshold to identify a relevant temporal parameter. This temporal threshold is absolute or relative. Optionally, the temporal threshold is a function of the detected address change. For instance, the temporal threshold may be generally inversely proportional to the magnitude of detected address change. Alternatively, the functional relationship includes, but is not limited to, additive, multiplicative, polynomial, exponential, differential, or logarithmic. The functional form of the threshold can be tailored to considerations such as false positive rate and processing/memory resources. Further, the result of comparing the temporal parameter to the temporal threshold is optionally applied to better characterize the relevance of the network address change.

As described above, empirical data plays a part in the location change analysis, especially in instances when a remote entity (such as server 121) cannot readily ascertain the specifics of the addressing scheme of the device 107, 111. For instance, sometimes a prefix length cannot be explicitly known by a remote entity. In the case where a Network Address is automatically assigned, this assignment is generally done from a "pool" or range of addresses that are topologically significant and correspond to a particular portion of a larger network. This portion is defined as those device (or nodes) that are each directly reachable from the last node as a result of the last forwarding operation. Because of the topological significance of this range or pool of addresses, it is possible that a "fixed" device which only re-cycled and has not changed location may only have a few bits change in the address that correspond to the local subnetwork. Longer periods of disconnection make it more likely that there was a change in the address (for example, in a prefix shorter than 24 bits).

Thus, empirical analysis coupled with the duration of disconnection can be used to fine-tune the sensitivity to address changes that may not reflect physical location change, thereby reducing the false positive rate. Empirical data includes, but is not limited to historical address and temporal data for user devices in communication with the server 121. Alternatively, user registration information submitted upon service enrollment such as mailing/billing address, phone number with area code, or zip code is also analyzed. Further, recorded user or device location data is used to augment the location change analysis. Moreover, routing data can also be used to discriminate among various address schemes by comparison to known features of the network topology. By aggregating network address and temporal data over time and across an entire user base, various embodiments can better determine whether a detected change in address is relevant or whether a particular duration for a particular device is indicative of a change in physical location. For instance, previous change of address data provided by a user can be coupled with historical logs of network address and temporal data. Optionally, empirical data is used to alter the thresholds described above with respect to address change and temporal parameters such as duration.

Additionally, empirical data from a service provider's own networks can be augmented with external data sources to more accurately identify relevant changes in address when considered in the context of time. In one embodiment, user data reflecting the users' various service providers is analyzed in view of existing data of network topology available through the whois database, routing tables, DNS LOC records, ping times and routing information such as BGP or traceroute. Further, commercial databases reflecting geographic locations of IP addresses can also be cross-referenced to user data to construct a proprietary topological and geographical view of the service provider's network. Using the available data, statistical models such as regression or time-trend analysis can be used to evaluate trends in changes in network address and time against location data including previously verified changes in location.

Once a potential change in location has been identified, selected embodiments prompt the user of the device 107 to provide the system with a new address. For instance, a user of a device 111 may receive a message or email stating that the system detected a possible change in physical/mailing address and requests the user send a new, updated physical/mailing address. Alternative embodiments estimate the physical location of the user device using IP geolocation methods. These IP geolocation methods provide approximate geographic information for specific IP addresses. Various approaches include, but are not limited to, whois look-up by IP address, whois look-up by AS number, whois look-up by domain name, DNS LOC records, geographic codes in domain names, application information, round-trip-time (RTT) approximations using ping, and routing data inferences (BGP, traceroute).

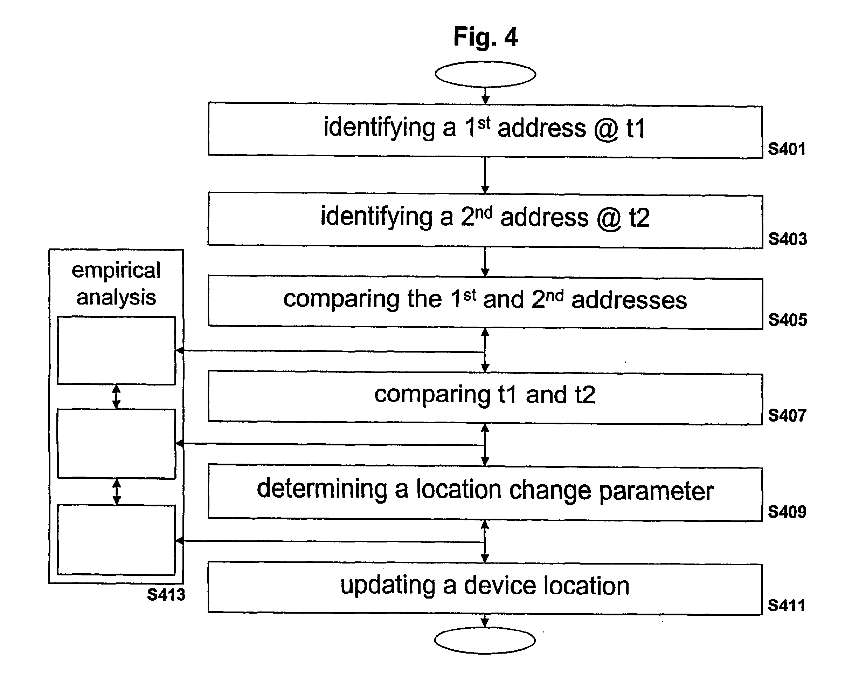

Fig. 4 illustrates additional aspects of selected embodiments. At a first time (t1), a first address is identified S401. At a second time (t2), a second address is identified S403. Among the various embodiments, the times t1 and t2 correspond to a device event including, but not limited to, connection, disconnection, reconnection, powering on/off, reset, re-initialization, and physical movement. The addresses are then compared S405, for instance, using selected ones of the above address change detection methods and address change threshold. Optionally, the address change comparison is informed by empirical analysis S413 to discriminate relevant address changes from those likely associated with a false positive. Additionally, the times are compared S407, for instance, using selected ones of the above temporal parameter estimation methods and temporal threshold. Relevant times figures include a duration of disconnection and durations of time spent associated with the respective addresses. Optionally, the temporal comparison is informed by empirical analysis S413 to discriminate relevant temporal parameters from those likely associated with a false positive. In view of the relevant change of address and temporal parameters, a location change parameter is determined S409, indicating whether or not a change in physical location has likely occurred. Optionally, an indication of possible or probable location change initiates a step of updating a device location in a database S411 including at least one of prompting a user or estimation using network geolocation analysis.

Various embodiments disclosed herein detect and identify a device which has changed the point of attachment to a communications network or networks. By coupling detected changes in network address with empirical observation of the nature of used addresses and the duration between device events (such as disconnects and reconnects), disclosed embodiments are able to qualify the nature of the changes and reduce the false positive rate of trivial address changes due to dynamic address changes such as DHCP pool address assignments. Thus, in cases where a user is prompted to update their address to maintain current location data for emergency (E911) and other purposes, disclosed embodiments provide a less intrusive option for service providers.

Any process descriptions or blocks in flow charts should be understood as representing modules, segments, or portions of computer software or code which include one or more executable instructions for implementing specific logical functions or steps in the process, and alternate implementations are included within the scope of the preferred embodiment of the present disclosure in which functions may be executed out of order form that shown or discussed, including substantially concurrently or in reverse order, depending on the functionality involved, as would be understood by those reasonably skilled in the art of the present disclosure.

It should be emphasized that the above-described embodiments, particularly any "preferred" embodiments, are merely possible examples of implementations, merely set forth for a clear understanding of the principles of the disclosure. Many variations and modifications may be made to the above-described embodiments of the disclosure without departing substantially from the spirit and principles of the disclosure. All such modifications and variations are intended to be included herein within the scope of this disclosure and the present disclosure and protected by the following claims.

The embodiments disclosed herein for detecting a change in a device attachment on a network can be implemented using computer usable medium having a computer readable code executed by special purpose or general purpose computers.

## Claims

1. A method of detecting a change in location of a device (107, 111) attached to a communications network (101, 103, 105):
(a) identifying (S301) a first address of the device (107, 111);
(b) identifying (S303) the removal of the device (107, 111) from the communications network;
(c) identifying (S305) when the device (107, 111) is reconnected to the communications network;
(d) identifying (S307) a second address of the device (107, 111) after the device (107, 111) is reconnected to the communications network;
(e) recording (S309) the amount of time between the removal and the reconnection of the device (107, 111);
(f) evaluating (S311) the differences between the first and second addresses; and
(g) identifying (S313) a change in location of the device (107, 111) as a function of the differences between the first and second addresses and the recorded amount of time.

2. The method of Claim 1, further comprising recording the amount of time the device (107, 111) is connected to the communication network (101, 103, 105) at the first address and identifying a change in location of the device (107, 111) as a function of the recorded amount of time the device (107, 111) is connected to the communication network (101, 103, 105) at the first address.

3. The method of Claim 1, where a change in location of a device (107, 111) is identified if the difference between the first and second addresses exceeds a predetermined threshold.

4. The method of Claim 3, wherein the predetermined threshold is a function of the recorded time.

5. The method of Claim 4, wherein the predetermined threshold is inversely proportional to the recorded time.

6. The method of Claim 1, wherein a change in location of a device (107, 111) is identified if the recorded amount of time exceeds a predetermined threshold.

7. The method of Claim 6, wherein the predetermined threshold is a function of the difference between the first and second addresses.

8. The method of Claim 7, wherein the predetermined threshold is inversely proportional to the difference between the first and second addresses.

9. A method of detecting a change in location of a device (107, 111) attached to a network (101, 103, 105), comprising:
(a) identifying (S401) a first address corresponding to the device (107, 111) attached to the network (101, 103, 105) at a first time;
(b) identifying (S403) a second address corresponding to the device (107, 111) attached to the network (101, 103, 105) at a second time;
(c) comparing (S405) the first address and the second address to determine an address parameter;
(d) comparing (S407) the first time and the second time to determine a temporal parameter; and
(e) determining (S409) a change in location corresponding to the address parameter and the temporal parameter.

10. The method of Claim 9, wherein the temporal parameter corresponds to the difference between the first time and the second time.

11. The method of one of Claims 9 to 10, wherein the first time corresponds to a disconnection of the device (107, 111) from the network.

12. The method of one of Claims 9 to 11, wherein the second time corresponds to a reconnection of the device (107, 111) to the network.

13. The method of one of Claims 9 to 10, wherein the first time corresponds to an initial connection of the device (107, 111) to the network (101, 103, 105) and the second time corresponds to a disconnection of the device (107, 111) from the network, and the temporal parameter corresponds to the difference between the first time and the second time.

14. The method of one of the preceding Claims, further comprising:
(a) prompting a user associated with the device (107, 111) to provide a physical location of the device (107, 111).

15. The method of one of the preceding Claims, further comprising updating a database with a location parameter corresponding to the attachment parameter using network address geolocation analysis including at least one of: whois database lookup, DNS LOC records, domain name geographic indicators, application information, round-trip time approximation, routing data inference.

16. A computer program product for use with a communications network device, said computer program product comprising:
a computer usable medium having computer readable program code modules embodied in said medium for performing the method of one of the preceding claims.

## Patentansprüche

1. Verfahren zum Erfassen einer Änderung der Position einer mit einem Kommunikationsnetz (101, 103, 105) verbundenen Vorrichtung (107, 111) mit nachfolgenden Schritten:
(a) Identifizieren (S301) einer ersten Adresse der Vorrichtung (107, 111);
(b) Identifizieren (S303) des Entfernens der Vorrichtung (107, 111) aus dem Kommunikationsnetz;
(c) Identifizieren (S305), wann die Vorrichtung (107, 111) mit dem Kommunikationsnetz erneut verbunden wird;
(d) Identifizieren (S307) einer zweiten Adresse der Vorrichtung (107, 111), nachdem die Vorrichtung (107, 111) mit dem Kommunikationsnetz erneut verbunden ist;
(e) Erfassen (S309) der Zeitspanne zwischen dem Entfernen und dem erneuten Verbinden der Vorrichtung (107, 111);
(f) Auswerten (S311) der Unterschiede zwischen der ersten und der zweiten Adresse; und
(g) Identifizieren (S313) einer Änderung der Position der Vorrichtung (107, 111) als eine Funktion der Unterschiede zwischen der ersten und der zweiten Adresse und der erfassten Zeitspanne.

2. Verfahren nach Anspruch 1 mit zusätzlich dem Schritt des Erfassens der Zeitspanne, für welche die Vorrichtung (107, 111) bei der ersten Adresse mit dem Kommunikationsnetz (101, 103, 105) verbunden ist, und Identifizieren einer Änderung der Position der Vorrichtung (107, 111) als eine Funktion der erfassten Zeitspanne, für welche die Vorrichtung (107, 111) bei der ersten Adresse mit dem Kommunikationsnetz (101, 103, 105) verbunden ist.

3. Verfahren nach Anspruch 1, bei welchem eine Änderung der Position einer Vorrichtung (107, 111) identifiziert wird, falls der Unterschied zwischen der ersten und der zweiten Adresse einen vorbestimmten Schwellwert überschreitet.

4. Verfahren nach Anspruch 3, bei welchem der vorbestimmte Schwellwert eine Funktion der erfassten Zeit ist.

5. Verfahren nach Anspruch 4, bei welchem der vorbestimmte Schwellwert umgekehrt proportional zu der erfassten Zeit ist.

6. Verfahren nach Anspruch 1, bei welchem eine Änderung der Position einer Vorrichtung (107, 111) identifiziert wird, falls die erfasste Zeitspanne einen vorbestimmten Schwellwert überschreitet.

7. Verfahren nach Anspruch 6, bei welchem der vorbestimmte Schwellwert eine Funktion des Unterschieds zwischen der ersten und der zweiten Adresse ist.

8. Verfahren nach Anspruch 7, bei welchem der vorbestimmte Schwellwert umgekehrt proportional zu dem Unterschied zwischen der ersten und der zweiten Adresse ist.

9. Verfahren zum Erfassen einer Änderung der Position einer mit einem Netzwerk (101, 103, 105) verbundenen Vorrichtung (107, 111) mit nachfolgenden Schritten:
(a) Identifizieren (S401) einer ersten Adresse, welche der mit dem Netzwerk (101, 103, 105) verbundenen Vorrichtung (107, 111) zu einer ersten Zeit entspricht;
(b) Identifizieren (S403) einer zweiten Adresse, welche der mit dem Netzwerk (101, 103, 105) verbundenen Vorrichtung (107, 111) zu einer zweiten Zeit entspricht;
(c) Vergleichen (S405) der ersten Adresse und der zweiten Adresse, um einen Adressparameter zu bestimmen;
(d) Vergleichen (S407) der ersten Zeit und der zweiten Zeit, um einen Zeitparameter zu bestimmen; und
(e) Bestimmen (S409) einer Änderung in der Position entsprechend dem Adressparameter und dem Zeitparameter.

10. Verfahren nach Anspruch 9, bei welchem der Zeitparameter dem Unterschied zwischen der ersten Zeit und der zweiten Zeit entspricht.

11. Verfahren nach Anspruch 9 oder 10, bei welchem die erste Zeit einer Trennung der Verbindung der Vorrichtung (107, 111) von dem Netzwerk entspricht.

12. Verfahren nach einem der Ansprüche 9 bis 11, bei welchem die zweite Zeit einer erneuten Verbindung der Vorrichtung (107, 111) mit dem Netzwerk entspricht.

13. Verfahren nach Anspruch 9 oder 10, bei welchem die erste Zeit einer anfänglichen Verbindung der Vorrichtung (107, 111) mit dem Netzwerk (101, 103, 105) entspricht und die zweite Zeit einer Trennung der Verbindung der Vorrichtung (107, 111) von dem Netzwerk entspricht, wobei der Zeitparameter dem Unterschied zwischen der ersten Zeit und der zweiten Zeit entspricht.

14. Verfahren nach einem der vorangehenden Ansprüche mit dem zusätzlichen Schritt des (a) Aufforderns eines mit der Vorrichtung (107, 111) verbundenen Nutzers, eine physische Position der Vorrichtung (107, 111) anzugeben.

15. Verfahren nach einem der vorangehenden Ansprüche mit dem zusätzlichen Schritt des Aktualisierens einer Datenbank mit einem Positionsparameter, welcher dem Verbindungsparameter entspricht, unter Verwendung einer Netzadressengeopositionierungsanalyse umfassend ein WHOIS-Datenbank-Lookup, DNS-LOC-Einträge, geographische Domain-Namen-Anzeiger, Anwendungsinformationen, eine Abschätzung der Umlaufzeit und/oder die Interferenz von Routing-Daten.

16. Computerprogrammprodukt zur Verwendung mit einer Kommunikationsnetzvorrichtung, wobei das Computerprogrammprodukt ein computernutzbares Medium umfasst, welches in dem Medium verkörperte computerlesbare Programmcodemodule umfasst, um das Verfahren nach einem der vorangehenden Ansprüche auszuführen.

## Revendications

1. Procédé pour détecter un changement de position d'un dispositif (107, 111) attaché à un réseau de communications (101, 103, 105), comprenant les étapes suivantes :
(a) identifier (S301) une première adresse du dispositif (107, 111) ;
(b) identifier (S303) le retrait du dispositif (107, 111) du réseau de communication ;
(c) identifier (S305) l'instant où le dispositif (107, 111) est reconnecté au réseau de communications ;
(d) identifier (S307) une deuxième adresse du dispositif (107, 111) après la reconnexion du dispositif (107, 111) au réseau de communications ;
(e) enregistrer (S309) la durée écoulée entre le retrait et la reconnexion du dispositif (107, 111) ;
(f) évaluer (S311) les différences entre les première et deuxième adresses ; et
(g) identifier (S313) un changement de position du dispositif (107, 111) en fonction des différences entre les première et deuxième adresses et de la durée enregistrée.

2. Procédé selon la revendication 1, comprenant en outre l'enregistrement de la durée pendant laquelle le dispositif (107, 111) est connecté au réseau de communications (101, 103, 105) à la première adresse et l'identification d'un changement de position du dispositif (107, 111) en fonction de la durée enregistrée pendant laquelle le dispositif (107, 111) est connecté au réseau de communications (101, 103, 105) à la première adresse.

3. Procédé selon la revendication 1, dans lequel un changement de position d'un dispositif (107, 111) est identifié si la différence entre les première et deuxième adresses dépasse un seuil prédéterminé.

4. Procédé selon la revendication 3, dans lequel le seuil prédéterminé est fonction du temps enregistré.

5. Procédé selon la revendication 4, dans lequel le seuil prédéterminé est inversement proportionnel au temps enregistré.

6. Procédé selon la revendication 1, dans lequel un changement de position d'un dispositif (107, 111) est identifié si la durée enregistrée dépasse un seuil prédéterminé.

7. Procédé selon la revendication 6, dans lequel le seuil prédéterminé est fonction de la différence entre les première et deuxième adresses.

8. Procédé selon la revendication 7, dans lequel le seuil prédéterminé est inversement proportionnel à la différence entre les première et deuxième adresses.

9. Procédé pour détecter un changement de position d'un dispositif (107, 111) attaché à un réseau (101, 103, 105), comprenant les étapes suivantes :
(a) identifier (S401) une première adresse correspondant au dispositif (107, 111) attaché au réseau (101, 103, 105) à un premier temps ;
(b) identifier (S403) une deuxième adresse correspondant au dispositif (107, 111) attaché au réseau (101, 103, 105) à un deuxième temps ;
(c) comparer (S405) la première adresse et la deuxième adresse pour déterminer un paramètre d'adresse ;
(d) comparer (S407) le premier temps et le deuxième temps pour déterminer un paramètre temporel ; et
(e) déterminer (S409) un changement de position correspondant au paramètre d'adresse et au paramètre temporel.

10. Procédé selon la revendication 9, dans lequel le paramètre temporel correspond à la différence entre le premier temps et le deuxième temps.

11. Procédé selon l'une des revendications 9 à 10, dans lequel le premier temps correspond à une déconnexion du dispositif (107, 111) du réseau.

12. Procédé selon l'une des revendications 9 à 11, dans lequel le deuxième temps correspond à une reconnexion du dispositif (107, 111) au réseau.

13. Procédé selon l'une des revendications 9 à 10, dans lequel le premier temps correspond à une connexion initiale du dispositif (107, 111) au réseau (101, 103, 105) et le deuxième temps correspond à une déconnexion du dispositif (107, 111) du réseau, et le paramètre temporel correspond à la différence entre le premier temps et le deuxième temps.

14. Procédé selon l'une des revendications précédentes, comprenant en outre l'étape suivante :
(a) inviter un utilisateur associé au dispositif (107, 111) à fournir une position physique du dispositif (107, 111).

15. Procédé selon l'une quelconque des revendications précédentes, comprenant en outre l'étape suivants :
mettre à jour une base de données avec un paramètre de position correspondant au paramètre d'attachement en utilisant une analyse de géo-localisation d'adresse réseau comprenant au moins l'un des éléments suivants : une correspondance dans une base de données Whois, des enregistrements DNS LOC, des indicateurs géographiques de noms de domaine, des informations d'application, une approximation de temps d'aller-retour, une inférence de données de routage.

16. Produit pour programme d'ordinateur, pour utilisation avec un dispositif réseau de communication, le produit pour programme d'ordinateur comprenant :
un support utilisable par un ordinateur comportant des modules de code de programme lisibles par un ordinateur et réunis sur le support pour réaliser le procédé de l'une quelconque des revendications précédentes.
